(19) Europäisches Patentamt
European Patent Office
Office européen des brevets

(11) **EP 3 929 683 A1**

(12) **EUROPÄISCHE PATENTANMELDUNG**

(43) Veröffentlichungstag:
**29.12.2021 Patentblatt 2021/52**

(51) Int Cl.:
**G05B 23/02** (2006.01)

(21) Anmeldenummer: **21175947.7**

(22) Anmeldetag: **26.05.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **17.06.2020 DE 102020116022**

(71) Anmelder: **Gebr. Bode GmbH & Co. KG
34123 Kassel (DE)**

(72) Erfinder:
• **Andler, Daniel
34266 Niestetal (DE)**
• **Hamberger, Harry
34266 Niesetal (DE)**

(74) Vertreter: **Patentanwälte Bauer Vorberg Kayser
Partnerschaft mbB
Goltsteinstraße 87
50968 Köln (DE)**

(54) **VERFAHREN ZUR ZUSTANDSBASIERTEN INSTANDHALTUNG EINER ZUGANGSVORRICHTUNG**

(57) Die Erfindung betrifft ein Verfahren zur zustandsbasierten Instandhaltung einer Zugangsanordnung (5) eines Fahrzeugs (1), insbesondere eines Fahrzeugs (1) des öffentlichen Personenverkehrs, wobei die Zugangsanordnung (11) eine Vielzahl von an dem Fahrzeug befestigten Zugangsvorrichtungen (2a, b) mit einem jeweiligen beweglichen Element (3a, b) und einem jeweiligen elektrischen Antrieb (4a, b) zum Verstellen des beweglichen Elements (3a, b) umfasst, wobei die elektrischen Antriebe (4a, b) mit jeweiligen Steuersignalen angesteuert werden, wobei basierend auf einem erfassten jeweiligen Zustand der Zugangsvorrichtungen (2a, b) ein jeweiliges Ist-Zustandssignal (9a, b) zur Beschreibung des jeweiligen Zustands erzeugt wird, wobei aus den Ist-Zustandssignalen (9a, b) für zumindest einen Teil der Zugangsvorrichtungen (2a, b) ein Gesamt-Durchschnittswert der Ist-Zustandssignale (9a, b) gebildet wird und wobei basierend auf einem jeweiligen Vergleich zwischen den Ist-Zustandssignalen (9a, b) und dem Gesamt-Durchschnittswert, ein jeweiliger Instandhaltungszustand (25a, b, c, d) der Vielzahl von Zugangsvorrichtungen (2a, b) bestimmt wird.

Fig. 1

**Beschreibung**

Die Erfindung betrifft ein Verfahren zur zustandsbasierten Instandhaltung einer Zugangsvorrichtung eines Fahrzeugs.

Grundsätzlich erfolgt bei praktisch allen technischen Vorrichtungen mit zunehmender Betriebsdauer eine Degradation, welche über kurz oder lang zu einem Ausfall und damit dazu führt, dass die Vorrichtung insgesamt oder wesentliche Teile der Vorrichtung repariert oder ausgetauscht werden müssen, bevor ein Weiterbetrieb der Vorrichtung möglich und erlaubt ist. Besonders ungünstig ist ein solcher Ausfall, wenn er überraschend auftritt und damit sowohl den laufenden Betrieb unterbricht als auch für die Dauer der Reparatur oder des Austausches die Verwendung einer Ersatzvorrichtung zur Aufrechterhaltung des Betriebs erfordert. Sowohl die fehlende Antizipierbarkeit solcher Ausfälle als auch die resultierende Notwendigkeit, ein entsprechend großes Reservoir an Ersatzvorrichtungen vorzuhalten, führt zu hohen Kosten. Diese Problematik gilt auch und insbesondere im Bereich von Fahrzeugen des öffentlichen Personenverkehrs und dort speziell bezogen auf Zugangsvorrichtungen wie Tür- und Schiebetrittsysteme.

Dem obigen Problem wird einerseits versucht zu begegnen, indem betriebszeitmäßig bestimmte Serviceintervalle vorgesehen sind, nach denen jeweils einzelne Komponenten gewartet oder ausgetauscht werden sollen. Der bei der Berechnung der Serviceintervalle erforderliche Sicherheitsfaktor führt aber bei einem wirksamen Verhindern von Ausfällen dazu, dass solche Wartungen tendenziell zu oft stattfinden und auch Teile ausgetauscht werden, welche an sich noch geraume Zeit vor einem Ausfall eingesetzt werden könnten.

Da die oben beschriebenen Degradationen regelmäßig auf an sich schleichend voranschreitende Vorgänge zurückgehen gibt es andererseits das Bestreben, durch Messung und Auswertung dieser schleichenden Vorgänge eine Vorhersage über einen drohenden Ausfall zu erhalten und damit in der Lage zu sein, die fragliche Komponente kurz vor dem Ausfall planmäßig warten oder austauschen zu können.

Das aus dem Stand der Technik bekannte amerikanische Patent US 6,636,814 B1, von welchem die vorliegende Erfindung als nächstkommend ausgeht, beschreibt ein solches prädiktives Diagnosesystem für ein motorgetriebenes automatisches Türsystem. Das Betriebsverhalten des Türsystems wird erfasst und der Energie- und Zeitverbrauch im Betrieb ermittelt. Diese Verbrauchsdaten werden mit historischen Verbrauchsdaten verglichen und basierend auf diesem Vergleich wird die Degradierungsrate des Türsystems ermittelt mit dem Ziel, passgenauere Servicezeitpunkte bestimmen zu können. Speziell ist hier vorgesehen, ein künstliches neuronales Netz dadurch zu trainieren, dass möglichst viele Versuchsreihen mit Exemplaren von Türsystem gefahren werden. Auf diese Weise kann das künstliche neuronale Netz Ausfallmuster selbständig erlernen und erkennen, ohne dass diese dem neuronalen Netz als solche identifiziert vorgegeben werden müssten.

Nachteilig an diesem Ansatz ist jedoch, dass viele Parameter des Betriebsverhaltens, so insbesondere auch der Energieverbrauch, nicht nur von dem Degradationszustand der Komponenten des Türsystems abhängig ist, sondern auch stark von wechselhaften externen Faktoren beeinflusst werden kann. So können etwa die Temperatur und die Luftfeuchtigkeit der Umgebungsluft wie auch eine räumliche Lage des Fahrzeugs mit dem Türsystem gemessene Betriebsparameter und auch den Energieverbrauch beeinflussen. Abweichungen in den Betriebsparametern oder im Energieverbrauch, welche durch solche externen Faktoren verursacht werden, zeigen daher keine Degradation an, sondern sind lediglich den vorübergehenden Umgebungsbedingungen geschuldet. Um diese Abhängigkeit von externen Faktoren aber rechnerisch zu berücksichtigen, wären sowohl umfangreiche Messreihen zur Bestimmung ihres genauen Einflusses auch eine aufwändige Sensorik zu ihrer Erfassung am betroffenen Fahrzeug im Betrieb erforderlich. Beide Maßnahmen wären aber mit wirtschaftlich nicht vertretbaren Kosten verbunden.

Daher besteht die Aufgabe der vorliegenden Erfindung darin, Verfahren zur zustandsbasierten Instandhaltung hinsichtlich des Einflusses solcher externer Faktoren unempfänglicher zu gestalten.

Bezogen auf ein Verfahren zur zustandsbasierten Instandhaltung einer Zugangsvorrichtung eines Fahrzeugs wird diese Aufgabe durch die Merkmale des Anspruchs 1 gelöst.

Wesentlich für die Erfindung ist die Erkenntnis, dass externe Faktoren wie die oben genannten Einflussgrößen regelmäßig ein Fahrzeug insgesamt und daher alle Zugangsvorrichtungen des Fahrzeugs betreffen. Demgegenüber betreffen Degradationserscheinungen normalerweise zunächst nur einige wenige Zugangsvorrichtungen des Fahrzeugs. Daher können Auffälligkeiten, welche alle Zugangsvorrichtungen betreffen, zuverlässig auf externe Faktoren zurückgeführt und daher hinsichtlich der Beobachtung einer Degradation ausgeklammert werden. Folglich kann der Vergleich gemessener Betriebsparameter aller Zugangsvorrichtungen eines Fahrzeugs mit einem Durchschnittswert dieser gemessenen Betriebsparameter dazu beitragen, degradationsbedingte Auffälligkeiten von denjenigen zu unterscheiden, welche bloß aus transienten Zuständen resultieren.

Das erfindungsgemäße Verfahren dient der zustandsbasierten Instandhaltung einer Zugangsanordnung eines Fahrzeugs. Bei diesem Fahrzeug kann es sich um ein Fahrzeug des öffentlichen Personenverkehrs handeln. Gemäß dem erfindungsgemäßen Verfahren umfasst die Zugangsanordnung eine Vielzahl von an dem Fahrzeug befestigten Zugangsvorrichtungen mit einem jeweiligen beweglichen Element und einem jeweiligen elektrischen Antrieb zum Verstellen des beweglichen Elements, wobei die elektrischen Antriebe mit jeweiligen Steuersignalen angesteuert werden.

Erfindungsgemäß wird basierend auf einem erfassten jeweiligen Zustand der Zugangsvorrichtungen ein jeweiliges Ist-Zustandssignal zur Beschreibung des jeweiligen Zustands erzeugt, wobei aus den Ist-Zustandssignalen für zumindest einen Teil der Zugangsvorrichtungen ein Gesamt-Durchschnittswert der Ist-Zustandssignale gebildet wird und wobei basierend auf einem jeweiligen Vergleich zwischen den Ist-Zustandssignalen und dem Gesamt-Durchschnittswert, ein jeweiliger Instandhaltungszustand der Vielzahl von Zugangsvorrichtungen bestimmt wird.

Der Ausdruck Ist-Zustandssignale ist hier so zu verstehen, dass es sich um Zustandssignale zur Beschreibung eines erfassten und damit tatsächlichen Zustands handelt. Grundsätzlich kann das Ist-Zustandssignal eine Vielzahl von Ist-Teilzustandssignalen umfassen, welche jeweils unterschiedliche physikalische Größen betreffen. Es kann aber auch sein, dass das Ist-Zustandssignal nur eine einzelne physikalische Größe betrifft. Entsprechend kann der Gesamt-Durchschnittswert eine Vielzahl von Gesamt-Teildurchschnittswerten aufweisen - also für jedes der Vielzahl von Ist-Teilzustandssignalen eins - oder nur einen Einzelwert für nur eine einzelne physikalische Größe aufweisen.

Der Instandhaltungszustand, welcher grundsätzlich also für jede Zugangsvorrichtung der Vielzahl von Zugangsvorrichtungen bestimmt wird, kann beliebig differenziert sein. So kann es sein, dass dieser Instandhaltungszustand einen von lediglich zwei möglichen Zuständen annehmen kann, z. B. "Wartung erforderlich" und "Wartung nicht erforderlich". Ebenso kann es sein, dass der Instandhaltungszustand eine projizierte Zeit bis zu einem Ausfall, ggf. zusammen mit einer Wahrscheinlichkeits- oder Genauigkeitsabschätzung umfasst. Schließlich kann es sein, dass der Instandhaltungszustand das Vorliegen eines spezifischen Fehlers oder Komponentenausfalls beschreibt. Der Instandhaltungszustand kann aber auch für alle Zugangsvorrichtungen der Vielzahl von Zugangsvorrichtungen einen in gleicher Weise gültigen Wert ermitteln. Damit haben alle Zugangsvorrichtungen den gleichen Instandhaltungszustand.

Einerseits kann der Vergleich zwischen den Ist-Zustandssignalen und dem Gesamt-Durchschnittswert einen absoluten Abweichungswert ermitteln, welcher also den Betrag einer absoluten Differenz ausdrückt. Dann kann es sein, dass der jeweilige Instandhaltungszustand durch einen Abgleich dieses absoluten Abweichungswertes mit einem entsprechenden Absolutgrenzwert ermittelt wird. Ein Überschreiten des Absolutgrenzwertes führt dann zu einem Instandhaltungszustand, welcher einen Fehler oder eine Wartungsbedürftigkeit anzeigt.

Eine bevorzugte Ausführungsform des erfindungsgemäßen Verfahrens sieht vor, dass mindestens ein insbesondere prozentualer Abweichungsgrenzwert vorgegeben ist, dass der Vergleich zwischen den Ist-Zustandssignalen und dem Gesamt-Durchschnittswert einen Abgleich mit dem mindestens einen Abweichungsgrenzwert umfasst und dass der jeweilige Instandhaltungszustand basierend auf dem Abgleich mit dem mindestens einen Abweichungsgrenzwert bestimmt wird. Es umfasst also der jeweilige Vergleich zwischen den Ist-Zustandssignalen und dem Gesamt-Durchschnittswert das Bestimmen eines relativen Abweichungswerts, wobei dieser insbesondere prozentual ausgedrückt werden kann. Übersteigt der relative Abweichungswert den Abweichungsgrenzwert, kann das zu einem Instandhaltungszustand führen, welcher einen Fehler oder eine Wartungsbedürftigkeit anzeigt.

Bevorzugt ist weiter, dass der Vergleich zwischen den Ist-Zustandssignalen und dem Gesamt-Durchschnittswert das Bilden eines jeweiligen Differenzwertes zwischen dem jeweiligen Ist-Zustandssignal und dem Gesamt-Durchschnittswert umfasst. Anders ausgedrückt wird die Differenz als Absolutbetrag zwischen dem Ist-Zustandssignal und dem Gesamt-Durchschnittswert bestimmt. Dieser Differenzwert gibt also die absolute Abweichung des jeweiligen Ist-Zustandssignals von dem Gesamt-Durchschnittswert an.

Es kann sein, dass nur ein einziger solcher Abweichungsgrenzwert vorgegeben ist. Eine weitere bevorzugte Ausführungsform des erfindungsgemäßen Verfahrens ist dadurch gekennzeichnet, dass eine Vielzahl von insbesondere prozentualen Abweichungsgrenzwerten vorgegeben sind, dass der Vergleich zwischen den Ist-Zustandssignalen und dem Gesamt-Durchschnittswert einen Abgleich mit der Vielzahl von Abweichungsgrenzwerten umfasst und dass der jeweilige Instandhaltungszustand basierend auf dem Abgleich mit der Vielzahl von Abweichungsgrenzwerten bestimmt wird. In diesem Fall kann also der Instandhaltungszustand nach der Vielzahl von Abweichungsgrenzwerten differenziert werden. Das Überschreiten eines höheren Abweichungsgrenzwerts führt also zu einem entsprechend kritischeren Instandhaltungszustand.

Neben dem Vergleich mit den Ist-Zustandssignalen kann zusätzlich auch ein Vergleich des Gesamt-Durchschnittswerts mit einem Grenz-Zustandssignalwert durchgeführt werden. Bei dem Grenz-Zustandssignalwert handelt es sich um einen Maximal- oder Minimalwert, dessen Überschreiten im Falle eines Maximalwerts oder dessen Unterschreiten im Falle eines Minimalwerts einen Fehler- oder Wartungsbedürftigkeitszustand als Instandhaltungszustand indiziert. Dieser Grenz-Zustandssignalwert wird regelmäßig unabhängig von den Ist-Zustandssignalen bestimmt, und zwar durch eine irgend geartete Simulation des Verhaltens der Zugangsvorrichtungen.

Gemäß einer bevorzugten Ausführungsform des vorschlagsgemäßen Verfahrens ist entsprechend vorgesehen, dass die Steuersignale auf ein physikalisches Simulationsmodell zur rechnerischen Simulation der jeweiligen Zugangsvorrichtung und zur Ermittlung eines Grenz-Zustandssignalwerts angewandt werden. Das Simulationsmodell dient der Simulation und der Modellierung physikalischer Zustände, ist aber nicht selbst physikalisch, da es aus Daten ggf. in Kombination mit Algorithmen besteht.

Weiter ist bevorzugt, dass der jeweilige Instandhaltungszustand auch basierend auf einem Vergleich zwischen dem Gesamt-Durchschnittswert und dem Grenz-Zustandssignalwert bestimmt wird. Es kann also sein, dass ein Instandhaltungszustand zur Anzeige eines Fehlers oder einer Wartungsbedürftigkeit bestimmt wird, wenn der Gesamt-Durchschnittswert den Grenz-Zustandssignalwert - im Falle eines Maximalwerts - übersteigt. Auf diese Weise kann der Fehlerfall erfasst werden, bei dem allen oder überwiegend vielen Zugangsvorrichtungen ein Ist-Zustandssignal entspricht, welches zu hoch ist. Dies kann etwa dann der Fall sein, wenn diese Zugangsvorrichtungen im Wesentlichen allesamt starke Degradationserscheinungen aufweisen. Dann ist nämlich jede einzelne relative Abweichung vom Durchschnittswert gering, sodass ein Vergleich zwischen den Ist-Zustandssignalen und dem Gesamt-Durchschnittswert regelmäßig keine Auffälligkeit ermitteln würde. Der Vergleich zwischen dem Gesamt-Durchschnittswert und dem Grenz-Zustandssignalwert hilft dann jedoch weiter. Liegt ein solches Übersteigen vor, betrifft der bestimmte Instandhaltungszustand alle Zugangsvorrichtungen, da der obige Vergleich nicht eine einzelne Zugangsvorrichtung betrifft. Bevorzugt ist weiter, dass der Gesamt-Durchschnittswert vor dem Vergleich um den prozentualen Abweichungsgrenzwert erhöht wird. Auf diese Weise wird bereits früher ein vom Normalzustand abweichender Instandhaltungszustand ermittelt.

Gemäß einer weiteren bevorzugten Ausführungsform des vorschlagsgemäßen Verfahrens ist vorgesehen, dass der jeweilige Instandhaltungszustand auch basierend auf einem Vergleich zwischen dem jeweiligen Ist-Zustandssignal und dem Gesamt-Durchschnittswert einerseits und dem Grenz-Zustandssignal andererseits bestimmt wird. Bei diesem Vergleich soll überprüft werden, ob sich für eine einzelne Zugangsvorrichtung eine absolute Abweichung gegenüber einem erwarteten Wertebereich ergibt, welche absolute Abweichung allzu groß ist. Bei dieser Variante kann es entsprechend insbesondere sein, dass der jeweilige Instandhaltungszustand auch basierend auf einem Vergleich zwischen der Addition des jeweiligen Ist-Zustandssignals mit dem jeweiligen Differenzwert und dem Grenz-Zustandssignalwert bestimmt wird. So kann etwa ein fehlerhafter oder wartungsbedürftiger Instandhaltungszustand für eine Zugangsvorrichtung bestimmt werden, wenn die Summe aus dem jeweiligen Ist-Zustandssignal und dem jeweiligen Differenzwert gemäß der obigen Definition - welcher Differenzwert folglich auch auf dem Gesamt-Durchschnittswert basiert - den Grenz-Zustandssignalwert übersteigt. Gegenüber dem Vergleich des Gesamt-Durchschnittswerts mit dem Grenz-Zustandssignalwert ist auf diese Weise eine individuelle Prüfung der Zugangsvorrichtungen möglich.

Grundsätzlich können das Erzeugen der Steuersignale und die Anwendung auf das Simulationsmodell insbesondere zur Ermittlung des Grenz-Zustandssignalwerts in einer oder mehreren Rechenvorrichtungen beliebiger Art erfolgen. Gemäß einer bevorzugten Ausführungsform des Verfahrens ist speziell vorgesehen, dass das Fahrzeug eine Vielzahl von elektronischen Steuervorrichtungen zur Ansteuerung einer jeweiligen Zugangsvorrichtung mit den Steuersignalen umfasst. Anders ausgedrückt hat dann jede Zugangsvorrichtung ihre eigene Steuervorrichtung. Diese Steuervorrichtungen können auch als Türsteuerungen bezeichnet werden.

Es kann sein, dass anstelle von nur einem Grenz-Zustandssignalwert, welcher gleichermaßen für alle Zugangsvorrichtungen zur Anwendung kommt, für jede Zugangsvorrichtung ein jeweils individueller Grenz-Zustandssignalwert ermittelt wird. Folglich sieht eine bevorzugte Ausführungsform des Verfahrens vor, dass das Fahrzeug eine Vielzahl von Lokalrecheneinheiten aufweist, welche das jeweilige bewegliche Element und den jeweiligen elektrischen Antrieb einer jeweiligen Zugangsvorrichtung simulieren, welche einen jeweiligen Grenz-Zustandssignalwert einer jeweiligen Zugangsvorrichtung ermitteln und/oder welche den Instandhaltungszustand einer jeweiligen Zugangsvorrichtung bestimmen. In diesem Fall hat also auch für diese Funktionen jede Zugangsvorrichtung ihre eigene Lokalrecheneinheit. Da diese Funktionen - jedenfalls was dynamische Daten angeht - weitgehend auf lokalen Informationen beruhen, bietet sich eine entsprechende Verteilung auf mehrere Einheiten und damit auch eine parallele Ausführbarkeit an. Es kann sein, dass die elektronischen Steuervorrichtungen der Vielzahl von elektronischen Steuervorrichtungen jeweils die entsprechende Lokalrecheneinheit umfassen. Speziell kann es sich bei den elektronischen Steuervorrichtungen und den Lokalrecheneinheiten jeweils um dieselbe Vorrichtung handeln.

Für andere Funktionen, welche auf Daten von mehreren oder allen Zugangsvorrichtungen beruhen, kann wiederum eine zentrale Ausführung vorteilhaft sein. Gemäß einer weiteren bevorzugten Ausführungsform des Verfahrens ist vorgesehen, dass eine Zentralrecheneinheit den Gesamt-Durchschnittswert ermittelt und die Ist-Zustandssignale mit dem Gesamt-Durchschnittswert vergleicht. Insbesondere kann es sein, dass die Zentralrecheneinheit den Instandhaltungszustand der jeweiligen Zugangsvorrichtung bestimmt.

Grundsätzlich kann die Zentralrecheneinheit an einem beliebigen Ort und insbesondere stationär und beabstandet von dem Fahrzeug angeordnet sein. In so einem Fall kann die Zentralrecheneinheit als "ground Server" bezeichnet werden.

Es kann aber auch sein, dass das Fahrzeug die Zentralrecheneinheit umfasst. Hier ist weiter bevorzugt, dass die Zentralrecheneinheit mit den Lokalrecheneinheiten über ein lokales Netzwerk des Fahrzeugs zur Datenkommunikation verbunden ist. Bei dem lokalen Netzwerk kann es sich auch um ein drahtloses lokales Netzwerk handeln.

Unter einem lokalen Netzwerk ist hier eine beliebige Verbindung zwischen zwei verschiedenen elektronischen Vorrichtungen zu verstehen. Mit anderen Worten geht das lokale Netzwerk über eine rein vorrichtungsinterne datentechnische Verbindung hinaus. Dabei kann das lokale Netzwerk eine beliebige Topologie aufweisen und insbesondere auch aus der lediglichen Verbindung von zwei Netzwerkknoten bestehen. Bei einem drahtlosen Netzwerk im vorliegenden Sinne kann es sich auch um ein Netzwerk handeln, welches lediglich teilweise eine drahtlose Übertragung vorsieht. Es kann sich bei dem drahtlosen Netzwerk auch um ein Mobilfunknetzwerk handeln.

Eine weitere bevorzugte Ausführungsform des erfindungsgemäßen Verfahrens ist dadurch gekennzeichnet, dass die Steuersignale und die Ist-Zustandssignale der Vielzahl von Zugangsvorrichtungen an die Zentralrecheneinheit zur Bestimmung des Instandhaltungszustands der jeweiligen Zugangsvorrichtung übertragen werden. Vorzugsweise erfolgt diese Übertragung über das lokale Netzwerk. Es kann aber auch sein, dass die Übertragung über ein zellulares Mobilfunknetzwerk erfolgt. Das bietet sich insbesondere dann an, wenn die Zentralrecheneinheit stationär und beabstandet zu dem Fahrzeug angeordnet ist.

Grundsätzlich können die Ist-Zustandssignale beliebige Eigenschaften betreffen, die den Zustand der Zugangsvorrichtung beschreiben. Speziell können die Zustandssignale beliebige erfasste Messgrößen und/oder beliebige gesetzte Stellgrößen der Zugangsvorrichtung beschreiben. Eine weitere bevorzugte Ausführungsform des Verfahrens ist dadurch gekennzeichnet, dass die Ist-Zustandssignale einen Energieverbrauch der jeweiligen Zugangsvorrichtung während eines Betätigungszyklus des beweglichen Elements der jeweiligen Zugangsvorrichtung umfassen. Bei dem Betätigungszyklus kann es sich um einen Öffnungszyklus und/oder um einen Schließzyklus handeln. Bei dem Energieverbrauch handelt es sich um eine Größe, die sich aufgrund einer ganzen Reihe von Degradationserscheinungen verändern kann. Daher ist sie besonders gut dazu geeignet, als Indikator vieler unterschiedlicher Degradationserscheinungen verwendet zu werden. Der Energieverbrauch während eines Betätigungszyklus ist deshalb so interessant, weil ein wesentlicher Energieverbrauch während einer Betätigung des beweglichen Elements stattfindet.

Der Instandhaltungszustand kann im Grunde beliebig viele Zustandswerte annehmen. Bevorzugt ist, dass der Instandhaltungszustand jedenfalls einen Normalzustand und einen Fehlerzustand annehmen kann. Gemäß dieser Ausgestaltung gibt es also mindestens zwei Zustandswerte. Bei dem Fehlerzustand kann es sich um einen im Grunde beliebigen Zustand handeln, welcher von einem Normalzustand abweicht. Der Fehlerzustand muss also nicht zwingend den Ausfall eines Bauteils anzeigen. Vielmehr kann es sein, dass der Fehlerzustand ein Warnzustand über das Vorliegen einer Abweichung ist und das fragliche Bauteil oder die fragliche Komponente aktuell weiterhin einsatzfähig ist.

Grundsätzlich können die Zugangsvorrichtungen, deren Ist-Zustandssignale die Basis zum Bestimmen des Instandhaltungszustands bilden, beliebig und auch für unterschiedliche Vergleiche wechselnd ausgewählt werden. Gemäß einer bevorzugten Ausführungsform des Verfahrens ist vorgesehen, dass der Gesamt-Durchschnittswert aus den Ist-Zustandssignale derjenigen Zugangsvorrichtungen der Vielzahl von Zugangsvorrichtungen gebildet wird, welche im Wesentlichen gleichzeitig einen Betätigungszyklus ihres beweglichen Elements durchlaufen. Wenn nämlich mehrere Zugangsvorrichtungen im Wesentlichen gleichzeitig einen Betätigungszyklus durchlaufen, dann ist davon auszugehen, dass die in diesem Zeitraum geltenden äußeren Einflüsse alle den Betätigungszyklus durchlaufenden Zugangsvorrichtungen betreffen.

Es können aber noch weitere Maßnahmen ergriffen werden, um einen möglichst sachgerechten Gesamt-Durchschnittswert zu ermitteln. So ist eine weitere bevorzugte Ausführungsform des Verfahrens dadurch gekennzeichnet, dass für das Bilden des Gesamt-Durchschnittswerts diejenigen Ist-Zustandssignale der Vielzahl von Zugangsvorrichtungen außen vor bleiben, welche eine Minimalschwelle unterschreiten oder eine Maximalschwelle überschreiten. Auf diese Weise verfälschen solche ausreißenden Werte nicht den Durchschnittswert.

Grundsätzlich können im Prinzip alle Berechnungsvorgänge des vorschlagsgemäßen Verfahrens zu einem beliebigen Zeitpunkt ausgeführt werden. So können auch die Ist-Zustandssignale etwa abgespeichert werden und zu einem späteren Zeitpunkt für die Berechnungen herangezogen werden. Gemäß einer bevorzugten Ausführungsform des erfindungsgemäßen Verfahrens ist vorgesehen, dass in einem Überwachungszeitraum während eines laufenden Betriebs der Vielzahl von Zugangsvorrichtungen die Steuersignale auf das Simulationsmodell zur rechnerischen Simulation der jeweiligen Zugangsvorrichtung und zur Ermittlung des Grenz-Zustandssignalwerts angewandt werden, vorzugsweise auch der Instandhaltungszustand der jeweiligen Zugangsvorrichtung bestimmt wird. Alternativ oder zusätzlich kann es sich bei dem Überwachungszeitraum auch um einen Zeitraum während eines laufenden Fahrbetriebs des Fahrzeugs handeln. Auf diese Weise kann der Instandhaltungszustand zeitnah im Betrieb ermittelt werden. Ferner wird die Notwendigkeit der Übertragung großer Mengen von dem Fahrzeug aus verringert.

Grundsätzlich können die Ist-Zustandssignale auf beliebige Art und Weise erzeugt werden. Gemäß einer weiteren bevorzugten Ausführungsform des Verfahrens ist vorgesehen, dass das Fahrzeug eine Vielzahl von Messvorrichtungen zum Erzeugen von Messsignalen basierend auf einer Messung an einer jeweiligen Zugangsvorrichtung aufweist. Dabei kann es sich um beliebige Arten von Messungen und damit insbesondere um physikalische, mechanische oder elektrische Messungen handeln. Hier ist es weiter bevorzugt, dass die Ist-Zustandssignale die Messsignale zumindest teilweise umfassen und/oder dass die Ist-Zustandssignale zumindest teilweise basierend auf den Messsignalen erzeugt werden. Mit anderen Worten können solche Messsignale auch als solche als Ist-Zustandssignale verstanden werden. Alternativ oder zusätzlich kann es sein, dass die Ist-Zustandssignale zumindest teilweise basierend auf den Messsignalen erzeugt werden. Das Erzeugen der Ist-Zustandssignale zumindest teilweise basierend auf dem Messsignalen kann dabei insbesondere durch eine jeweilige Steuervorrichtung erfolgen. In diesem Falle entsprechen zumindest einige Ist-Zustandssignale einer Weiterverarbeitung oder Auswertung der Messsignale.

Die Ist-Zustandssignale und/oder die obigen Messsignale können auch die Grundlage für eine Steuerung oder eine Regelung des jeweiligen elektrischen Antriebs bilden, sodass sie für mindestens zwei unterschiedliche Zwecke verwendet werden und insofern eine Doppelnutzung vorliegt. Eine bevorzugte Ausführungsform des Verfahrens ist dadurch gekennzeichnet, dass basierend auf Rückkopplungssignalen die Steuersignale zur Ansteuerung eines jeweiligen elektrischen Antriebs erzeugt werden. Es kann dabei sein, dass die Rückkopplungssignale von den Ist-Zustandssignalen umfasst sind. Ebenso kann es sein, dass die Rückkopplungssignale die Messignale sind. Bevorzugt ist weiter, dass basierend auf den Messignalen die Steuersignale zur Ansteuerung eines jeweiligen elektrischen Antriebs erzeugt werden. Bevorzugt ist, dass die Steuersignale zur Ansteuerung eines jeweiligen elektrischen Antriebs durch ein auf einer jeweiligen Steuervorrichtung ablaufendes Steuerprogramm erzeugt werden.

Für die Ansteuerung des elektrischen Antriebs ist die Lage des beweglichen Elements eine wichtige Information. Es ist daher bevorzugt, dass die Rückkopplungssignale jeweils ein Kodiersignal zur Angabe einer Position des jeweiligen beweglichen Elements umfassen. Es kann auch sein, dass die Rückkopplungssignale aus dem jeweiligen Kodiersignal bestehen.

Grundsätzlich kann es sich auch bei den Steuersignalen um Signale zur Ansteuerung beliebiger Vorgänge handeln. Eine bevorzugte Ausführungsform des Verfahrens ist dadurch gekennzeichnet, dass die Steuersignale jeweils eine Motorspannung zum Anlegen an den jeweiligen elektrischen Antrieb umfassen. Es kann auch sein, dass die Steuersignale aus der jeweiligen Motorspannung bestehen. Alternativ oder zusätzlich kann es sein, dass die Ist-Zustandssignale einen durch den jeweiligen elektrischen Antrieb fließenden Motorstrom umfassen.

Auch die Art des erfassten Zustands kann grundsätzlich beliebig sein. Bestimmte erfasste Werte sind aber durch ihre charakteristischen Eigenschaften für die Bestimmung einer Degradation besonders interessant. Eine weitere bevorzugte Ausführungsform des Verfahrens ist daher dadurch gekennzeichnet, dass der erfasste Zustand der jeweiligen Zugangsvorrichtung einen in Bewegungsphasen unterteilten Bewegungsablauf des beweglichen Elements umfasst und dass der Vergleich zwischen den Ist-Zustandssignalen und dem Gesamt-Durchschnittswert basierend auf jeweils unterschiedlichen charakteristischen Signalmerkmalen für mindestens eine Bewegungsphase erfolgt. Es kann beispielsweise sein, dass der Bewegungsablauf in eine Beschleunigungsphase, eine kontinuierliche Phase und eine Bremsphase des beweglichen Elements unterteilt ist. Regelmäßig ist es sinnvoll, dem Gesamt-Durchschnittswert jeweils separat für diese Phasen zu bilden.

Das Simulationsmodell kann grundsätzlich auf an sich beliebige Art und Weise erzeugt worden sein. Gemäß einer bevorzugten Ausführungsform des Verfahrens ist vorgesehen, dass das Simulationsmodell aus Konstruktionsdaten zur Beschreibung der Zugangsvorrichtungen erzeugt wurde. Mit anderen Worten handelt es sich um Daten, ausgehend von denen die Zugangsvorrichtungen ganz oder teilweise hergestellt werden könnte oder tatsächlich hergestellt wurde. Eine solche Herstellung ist ganz allgemein zu verstehen und kann den Zusammenbau, das Zusammenfügen oder das sonstige Verbinden von Einzelteilen umfassen. Diese Einzelteile bilden zumindest einen Teil der jeweiligen Zugangsvorrichtung und es kann sein, dass für diese Einzelteile charakterisierende Daten in den Konstruktionsdaten bereitgestellt werden. Ebenso kann es sein, dass basierend auf Vorgaben in den Konstruktionsdaten entsprechend spezifizierte Einzelteile hergestellt und dann zusammengefügt wurden.

Bei den Zugangsvorrichtungen kann es sich insbesondere um jeweilige Türsysteme handeln, wobei dann das jeweilige bewegliche Element ein Türflügel sein kann. Ebenso kann es sich bei den Zugangsvorrichtung um jeweilige Schiebetrittsysteme handeln, wobei in diesem Fall das jeweilige bewegliche Element ein Schiebetritt sein kann.

Bei dem Simulationsmodell kann es sich um beliebige Daten, einschließlich spezieller formelhafter Beziehungen und spezieller numerischer Ansätze handeln, welche der rechnerischen Simulation der Zugangsvorrichtung dienen. Dabei reicht es aus, dass nur bestimmte Merkmale oder Messgrößen der jeweiligen Zugangsvorrichtung simuliert werden. Ebenso ist bei dieser Simulation nicht grundsätzlich eine bestimmte erzielte Genauigkeit erforderlich. Das Simulationsmodell kann einerseits festgelegte Berechnungsalgorithmen umfassen, welche dann lediglich durch variable Daten parametrisiert werden. Das Simulationsmodell kann aber auch sowohl hinsichtlich seiner Parameter als auch der Berechnungsansätze variabel sein. Das kann sowohl die Art betreffen, wie bestimmte physikalischen Vorgänge rechnerisch nachgebildet werden, als auch die Auswahl von numerischen Lösungsansätzen für diese Nachbildungen betreffen.

Grundsätzlich kann es sein, dass das Simulationsmodell nur aus den Konstruktionsdaten erzeugt wurde, dass also keinerlei Messungen oder Versuche an einer realen Zugangsvorrichtung in das Simulationsmodell eingeflossen sind. Gemäß einer bevorzugten Ausführungsform des Verfahrens ist jedoch vorgesehen, dass das Simulationsmodell durch Messungen an Exemplaren der Zugangsvorrichtungen angepasst wurde, indem an den Exemplaren der Zugangsvorrichtungen vor Befestigung an dem Fahrzeug Messungen durchgeführt wurden. Die Bezugnahme auf Exemplare der Zugangsvorrichtungen verdeutlicht, dass die Messungen oder Versuche nicht notwendigerweise an denselben Zugangsvorrichtungen - im Sinne derselben Exemplare - durchgeführt wurden, deren elektrische Antriebe gemäß dem vorschlagsgemäßen Verfahren mit Steuersignalen angesteuert werden und deren jeweiliger Zustand zum Erzeugen der Ist-Zustandssignale erfasst wird. Es reicht also aus, dass die Messungen oder Versuche an baugleichen Zugangsvorrichtungen durchgeführt wurden.

Grundsätzlich kann das Simulationsmodell aus den Konstruktionsdaten erzeugt werden, welche der Herstellung der Zugangsvorrichtungen insgesamt zugrunde lagen. Hier liegen also keine separaten Konstruktionsdaten für einzelne Teile der jeweiligen Zugangsvorrichtung vor. Gemäß einer weiteren bevorzugten Ausführungsform des Verfahrens ist andererseits vorgesehen, dass die Konstruktionsdaten eine Kombination einzelner Konstruktionselemente aufweisen, dass den Konstruktionselementen ein jeweiliges Elementsimulationsmodell zur Beschreibung des Konstruktionselements zugeordnet ist und dass das Erzeugen des Simulationsmodells die Kombination der jeweiligen Elementsimulationsmodelle der Konstruktionselemente umfasst. In diesem Fall ist es weiter bevorzugt, dass die Zugangsvorrichtungen jeweils Bauelemente aufweisen, welche den Konstruktionselementen entsprechen. Mit anderen Worten wird das Simulationsmodell nicht ausgehend von den Konstruktionsdaten insgesamt erstellt, sondern zumindest teilweise von den Elementsimulationsmodellen der Konstruktionselemente, welche Bestandteil der Konstruktionsdaten sind. Die den Konstruktionselementen - als virtuelle Elemente in den Konstruktionsdaten - entsprechenden realen Bauelemente sind umfasst von den realen Zugangsvorrichtungen. Durch diese bevorzugte Ausführungsform wird die Komplexität bei der Bestimmung des Simulationsmodells verringert, weil auf die jeweiligen Modelle der einzelnen Bestandteile zurückgegriffen werden kann.

Eine bevorzugte Ausführungsform des Verfahrens ist dadurch gekennzeichnet, dass zumindest einige der Elementsimulationsmodelle durch Anwendung von mechanischen und/oder elektrischen Formeln auf Elementkonstruktionsdaten des Konstruktionselements aus einem Programm für computergestützten Entwurf erhalten wurden. Mit anderen Worten beruhen die Elementsimulationsmodelle nicht auf Messungen oder Versuchen an den realen Bauelementen, sondern auf Berechnungen basierend auf den Eigenschaften des nur virtuellen Konstruktionselements. Auf diese Weise kann ein Elementsimulationsmodell verwendet werden noch bevor ein entsprechendes reales Bauelement hergestellt wurde. Bei dem obigen Programm kann es sich um ein Programm für computergestützten mechanischen und/oder elektrischen Entwurf handeln.

Weitere Einzelheiten, Merkmale, Ziele und Vorteile der vorliegenden Erfindung werden nachfolgend anhand der lediglich ein Ausführungsbeispiel wiedergebenden Zeichnung erläutert. In der Zeichnung zeigt

Fig. 1    eine Prinzipdarstellung eines Fahrzeugs mit einer Zugangsanordnung zur Ausführung eines Ausführungsbeispiels des vorschlagsgemäßen Verfahrens und

Fig. 2    schematisch ein Fließbild des vorschlagsgemäßen Verfahrens gemäß dem Ausführungsbeispiel der Fig. 1.

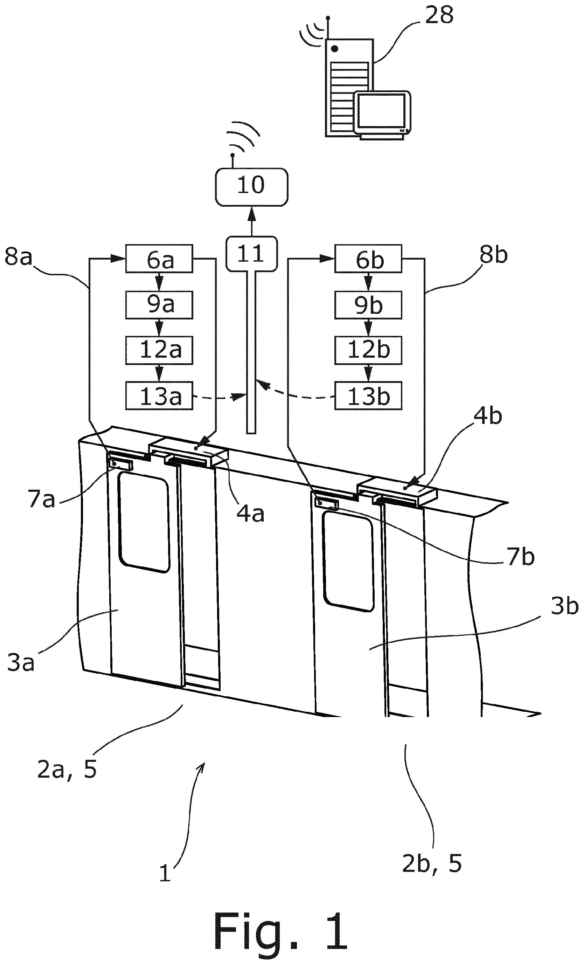

Bei dem in der Prinzipdarstellung der Fig. 1 wiedergegebenen Fahrzeug 1 handelt es sich um ein Schienenfahrzeug des öffentlichen Personenverkehrs mit einer Vielzahl von an dem Fahrzeug 1 befestigten Fahrgasttüren, von denen hier zwei beispielhaft als Zugangsvorrichtungen 2a, b einer Zugangsanordnung 5 des Fahrzeugs 1 wiedergegeben sind. Jede Zugangsvorrichtung 2a, b umfasst jeweils ein bewegliches Element 3a, b, bei welchem beweglichen Element 3a, b es sich hier jeweils um einen Türflügel handelt, und einen elektrischen Antrieb 4a, b - hier jeweils ein Elektromotor - zum Verstellen des Türflügels.

Die elektrischen Antriebe 4a, b werden jeweils mit Steuersignalen angesteuert, welche von einer jeweiligen elektronischen Steuervorrichtung 6a, b des Fahrzeugs 1 ausgehen. Im vorliegenden Fall handelt es sich bei den Steuersignalen um eine an den elektrischen Antrieb 4a, b angelegte Motorspannung. Das Fahrzeug weist ferner eine jeweilige Messvorrichtung 7a, b an jeder Zugangsvorrichtung 2a, b auf, welche Messvorrichtungen 7a, b jeweilige Messsignale 8a, b erzeugen. Die Messsignale 8a, b umfassen für jede Zugangsvorrichtung 2a, b Betrag und Polarität des jeweiligen Motorstroms durch den Elektromotor des elektrischen Antriebs 4a, b.

Aus diesen Messsignalen 8a, b und der gemäß den Steuersignalen angelegten Motorspannung werden von der jeweiligen Steuervorrichtung 6a, b Ist-Zustandssignale 9a, b ermittelt, welche einerseits die Messsignale 8a, b umfassen und darüber hinaus ein Türenergiesignal sowie ein Türzyklenzählsignal umfassen. Das Türenergiesignal umfasst die elektrische Energie, welche zur Bewegung des beweglichen Elements 3a, b jeweils für einen Öffnungs- oder Schließvorgang verbraucht wird. Das Türenergiesignal lässt sich aus dem Motorstrom der Messsignale 8a, b und der Motorspannung entsprechend den Steuersignalen ermitteln. Eine solche Ermittlung kann etwa gemäß der nachstehenden Formel erfolgen.

$$E[mJ] = 1000 \cdot T_s[s] \sum_{k=1}^{N} u(k)[V] \cdot i(k)[A])$$

Die Motorspannung u und der Motorstrom i werden dabei mit einer Periode von Ts festgehalten bzw. gemessen. Die Anzahl dieser Messungen beträgt N. Hier und nachstehend ist mit dem Türenergiesignal die elektrische Energie als Signal jeweils und gesondert für alle Öffnungs- und Schließvorgänge in dem betreffenden Erfassungszeitraum gemeint. Das Türzyklenzählsignal beschreibt die Anzahl der abgeschlossenen Öffnungs- und Schließvorgänge des jeweiligen beweglichen Elements 3a, b. Ferner umfassen die tatsächlichen Ist-Zustandssignale 9a, b auch eine Information darüber, ob und an welchen Öffnungs- und Schließvorgängen das jeweilige bewegliche Element 3a, b überhaupt teilgenommen hat.

Das Fahrzeug 1 weist ferner eine Zentralrecheneinheit 10 auf, welche über ein als Kommunikationsbus ausgebildetes Netzwerk 11 nachrichtentechnisch mit Lokalrecheneinheiten 12a, b des Fahrzeugs 1 verbunden ist, wobei jeweils eine Lokalrecheneinheit 12a, b für jede Zugangsvorrichtung 2a, b vorgesehen ist. Die Anbindung der Lokalrecheneinheiten 12a, b erfolgt dabei über Lokalnetzwerkschnittstellen 13a, b des Fahrzeugs 1, wobei für jede Lokalrecheneinheit 12a, b eine solche Lokalnetzwerkschnittstelle 13a, b vorgesehen ist. Über diese Lokalnetzwerkschnittstellen 13a, b kommunizieren die Lokalrecheneinheiten 12a, b mit der Zentralrecheneinheit 10 und übertragen insbesondere die tatsächlichen Zustandssignale 9a, b an die Zentralrecheneinheit 10. Die Zentralrecheneinheit 10 wiederum übermittelt wiederum Steuerkommandos an die Lokalrecheneinheiten 12a, b, welche die Grundlage für die Erzeugung der Steuersignale bilden.

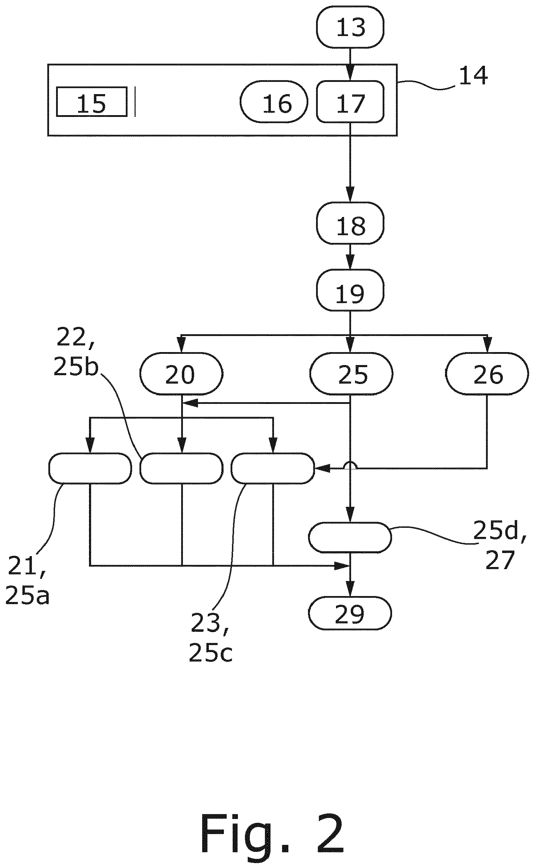

Verschiedene Schritte des vorschlagsgemäßen Verfahrens gemäß einem Ausführungsbeispiel sind dabei in der Fig. 2 wiedergegeben. Nach dem initialen Startschritt 13, welcher hier durch das Einfahren und Anhalten des Fahrzeugs 1 an einem Bahnhof eingeleitet wird, folgt ein Erfassungsschritt 14. Während dieses Erfassungsschritts 14 finden eine Vielzahl von Öffnungs- und Schließbewegungen 15 der beweglichen Elemente 3a, b der verschiedenen Zugangsvorrichtungen 2a, b statt. In einem Berechnungsschritt 16, welcher einen ersten Teilschritt des Erfassungsschritts 14 bildet, wird das Türenergiesignal gemäß der obigen Formel für jedes bewegliche Element durch die jeweilige Lokalrecheneinheit 12a, b berechnet. Dieses Türenergiesignal wird gemeinsam mit den übrigen, bereits genannten Ist-Zustandssignalen 9a, b im Übertragungsschritt 17, welcher den zweiten Teilschritt des Erfassungsschritts 14 bildet, von der jeweiligen Lokalrecheneinheit 12a, b an die Zentralrecheneinheit 10 übertragen.

In dem anschließenden Mittelungsschritt 18 mittelt die Zentralrecheneinheit 10 für jedes bewegliche Element 3a, b das Türenergiesignal jeweils für alle Öffnungsvorgänge und für alle Schließvorgänge. Es werden also für alle beweglichen Elemente 3a, b ein Öffnungsenergiemittelwert sowie ein Schließenergiemittelwert ermittelt, welche dann ebenfalls zu den bereits vorhandenen Ist-Zustandssignalen 9a, b hinzugefügt werden.

Es folgt ein Konditionierungsschritt 19, in welchem erstens die Türenergiesignale sowie die soeben in dem Mittelungsschritt 18 bestimmten Mittelwerte der inaktiven beweglichen Elemente 3a, b - also derjenigen, welche an den Öffnungs- und Schließvorgängen nicht teilgenommen haben - als ungültig gekennzeichnet werden. Zweitens erfolgt in dem Konditionierungsschritt 19 ebenfalls eine Kennzeichnung als ungültig für diejenigen beweglichen Elemente 3a, b, bei denen die in dem Mittelungsschritt 18 bestimmten Mittelwerte jeweils den kleinsten und den größten Wert ergeben haben. Drittens wird in dem Konditionierungsschritt 19 jeweils ein Durchschnittswert für den Öffnungs- und den Schließvorgang aus den verbliebenen Mittelwerten ermitteln. Diese beiden Durchschnittswerte zusammen bilden als Wertepaar einen Gesamt-Durchschnittswert der Ist-Zustandssignale. Dieser Gesamt-Durchschnittswert wird für alle beweglichen Elemente 3a, b angesetzt und ist entsprechend "global".

In dem anschließenden relativen Vergleichsschritt 20 wird für alle beweglichen Elemente 3a, b, welche an den Öffnungs- und Schließvorgängen teilgenommen haben, ein Vergleich zwischen dem zugeordneten Öffnungsenergiemittelwert sowie dem zugeordneten Schließenergiemittelwert - also Ist-Zustandssignalen 9a, b - und dem in dem Konditionierungsschritt 19 ermittelten Gesamt-Durchschnittswert - also dem "globalen" Durchschnittswert jeweils für den Öffnungsvorgang und den Schließvorgang - durchgeführt. Das Ergebnis des Vergleichs wird als "Delta" der Öffnungsenergie bzw. der Schließenergie für das jeweilige bewegliche Element 3a, b bezeichnet und durch Abgleich mit einem noch zu beschreibenden Abweichungsgrenzwert in eine von drei Klassen kategorisiert.

Weicht der Öffnungsenergiemittelwert von dem "globalen" Durchschnittswert für den Öffnungsvorgang bzw. der Schließenergiemittelwert von dem "globalen" Durchschnittswert für den Schließvorgang um einen prozentualen Betrag ab, welcher kleiner als ein erster Abweichungsgrenzwert - hier z. B. ein Relativgrenzwert von 10 % - ist, so wird festgestellt, dass eine Normalabweichung 21 vorliegt.

Liegt der prozentuale Betrag oberhalb des ersten Abweichungsgrenzwerts aber noch unterhalb eines zweiten Abweichungsgrenzwerts, welcher hier z. B. 20 % betragen kann - so liegt eine Geringabweichung 22 vor. Übersteigt der prozentuale Betrag auch den zweiten Relativgrenzwert, so wird eine Starkabweichung 23 festgestellt.

Im Falle einer Normalabweichung 21 ist für das jeweilige bewegliche Element 3a, b vorerst keine weitere Maßnahme vorgesehen. Im Falle einer Geringabweichung 22 kann eine Vormerkung erfolgen, sodass etwa bei der nächsten routinemäßigen Wartung eine spezielle Inspektion des jeweiligen beweglichen Elements 3a, b erfolgt. Schließlich kann im Falle einer Starkabweichung 23 eine außerplanmäßige Wartung des jeweiligen beweglichen Elements 3a, b angesetzt werden. Die Normalabweichung 21, die Geringabweichung 22 und die Starkabweichung 23 können folglich als jeweils unterschiedliche Instandhaltungszustände 25a, b, c der jeweiligen Zugangsvorrichtung 2a, b verstanden werden.

Parallel und im Wesentlichen zeitgleich zu dem oben beschriebenen relativen Vergleichsschritt 20 erfolgt sowohl ein erster absoluter Vergleichsschritt 25 als auch ein zweiter absoluter Vergleichsschritt 26. Dabei wird in dem ersten absoluten Vergleichsschritt 25 der oben bereits genannte Gesamt-Durchschnittswert, welcher also die durchschnittliche Energie der betrachteten Zugangsvorrichtungen 2a, b für den Schließvorgang und den Öffnungsvorgang angibt, mit einem entsprechenden Grenz-Zustandssignalwert jeweils für den Schließvorgang und den Öffnungsvorgang verglichen.

Speziell wird hier geprüft, ob der Gesamt-Durchschnittswert um den prozentualen Wert des ersten Abweichungsgrenzwerts erhöht den Grenz-Zustandssignalwert übersteigt. In dem Fall eines solchen Übersteigens wird als weiterer Instandhaltungszustand 25d eine Generalüberprüfung 27 festgestellt und eine Überprüfung aller Türen vorgenommen. Dieser Sachverhalt bedeutet nämlich, dass zwar keine einzelne der Zugangsvorrichtungen 2a, b ein stark abweichendes Verhalten aufweist, dass aber alle Zugangsvorrichtungen 2a, b gemeinsam ein auffälliges Verhalten an den Tag legen.

In dem zweiten absoluten Vergleichsschritt 26 schließlich wird für jedes bewegliche Element 3a, b der jeweilige Öffnungsenergiemittelwert bzw. der Schließenergiemittelwert zu der entsprechenden Größe "Delta" gemäß der obigen Beschreibung addiert. Wie bereits festgestellt wird die Größe "Delta" insbesondere basierend auf dem Gesamt-Durchschnittswert ermittelt. Überschreitet für irgendeine der beweglichen Elemente 3a, b die Summe aus der Addition den oben beschriebenen Grenz-Zustandssignalwert, so wird die Starkabweichung 23 als Instandhaltungszustand 25c festgestellt und entsprechend weiter verfahren.

Der relative Vergleichsschritt 20, der erste absolute Vergleichsschritt 25 und der zweite absolute Vergleichsschritt 26 enden mit dem Abschlussschritt 29.

Die oben beschriebenen Instandhaltungszustände 25a-d, nämlich die Normalabweichung 21, die Geringabweichung 22, die Starkabweichung 23 und die Generalüberprüfung 27 - werden über ein mobiles Kommunikationsprotokoll an einen zentralen Server 28 übermittelt. Dieser Server 28 ist nicht am Fahrzeug 1 angeordnet, sondern befindet sich vielmehr stationär an einem zentralen Standort.

Der Grenz-Zustandssignalwert - jeweils für den Schließvorgang und den Öffnungsvorgang - wurde von der Zentralrecheneinheit 10 auf Basis eines Simulationsmodells ermittelt, welches Simulationsmodell aus Konstruktionsdaten berechnet wurde, die der computergestützten Konstruktion der Zugangsvorrichtungen 2a, b und insbesondere der elektrischen Antriebe 4a, b und der beweglichen Elemente 3a, b zugrunde lagen.

## Patentansprüche

1. Verfahren zur zustandsbasierten Instandhaltung einer Zugangsanordnung (5) eines Fahrzeugs (1), insbesondere eines Fahrzeugs (1) des öffentlichen Personenverkehrs, wobei die Zugangsanordnung (11) eine Vielzahl von an dem Fahrzeug befestigten Zugangsvorrichtungen (2a, b) mit einem jeweiligen beweglichen Element (3a, b) und einem jeweiligen elektrischen Antrieb (4a, b) zum Verstellen des beweglichen Elements (3a, b) umfasst, wobei die elektrischen Antriebe (4a, b) mit jeweiligen Steuersignalen angesteuert werden, wobei basierend auf einem erfassten jeweiligen Zustand der Zugangsvorrichtungen (2a, b) ein jeweiliges Ist-Zustandssignal (9a, b) zur Beschreibung des jeweiligen Zustands erzeugt wird, wobei aus den Ist-Zustandssignalen (9a, b) für zumindest einen Teil der Zugangsvorrichtungen (2a, b) ein Gesamt-Durchschnittswert der Ist-Zustandssignale (9a, b) gebildet wird und wobei basierend auf einem jeweiligen Vergleich zwischen den Ist-Zustandssignalen (9a, b) und dem Gesamt-Durchschnittswert, ein jeweiliger Instandhaltungszustand (25a, b, c, d) der Vielzahl von Zugangsvorrichtungen (2a, b) bestimmt wird.

2. Verfahren nach Anspruch 1, **dadurch gekennzeichnet, dass** mindestens ein insbesondere prozentualer Abweichungsgrenzwert vorgegeben ist, dass der Vergleich zwischen den Ist-Zustandssignalen (9a, b) und dem Gesamt-Durchschnittswert einen Abgleich mit dem mindestens einen Abweichungsgrenzwert umfasst und dass der jeweilige Instandhaltungszustand (25a, b, c, d) basierend auf dem Abgleich mit dem mindestens einen Abweichungsgrenzwert bestimmt wird, vorzugsweise, dass der Vergleich zwischen den Ist-Zustandssignalen (9a, b) und dem Gesamt-Durchschnittswert das Bilden eines jeweiligen Differenzwertes zwischen dem jeweiligen Ist-Zustandssignal (9a, b) und dem Gesamt-Durchschnittswert umfasst.

3. Verfahren nach Anspruch 2, **dadurch gekennzeichnet, dass** eine Vielzahl von insbesondere prozentualen Abweichungsgrenzwerten vorgegeben sind, dass der Vergleich zwischen den Ist-Zustandssignalen (9a, b) und dem Gesamt-Durchschnittswert einen Abgleich mit der Vielzahl von Abweichungsgrenzwerten umfasst und dass der jeweilige Instandhaltungszustand (25a, b, c, d) basierend auf dem Abgleich mit der Vielzahl von Abweichungsgrenzwerten bestimmt wird.

4. Verfahren nach einem der Ansprüche 1 bis 3, **dadurch gekennzeichnet, dass** die Steuersignale auf ein physikalisches Simulationsmodell zur rechnerischen Simulation der jeweiligen Zugangsvorrichtungen (2a, b) und zur Ermittlung eines Grenz-Zustandssignalwerts angewandt werden, vorzugsweise, dass der jeweilige Instandhaltungszustand (25a, b, c, d) auch basierend auf einem Vergleich zwischen dem Gesamt-Durchschnittswert und dem Grenz-Zustandssignalwert bestimmt wird.

5. Verfahren nach einem der Ansprüche 1 bis 4, **dadurch gekennzeichnet, dass** der jeweilige Instandhaltungszustand (25a, b, c, d) auch basierend auf einem Vergleich zwischen dem jeweiligen Ist-Zustandssignal (9a, b) und dem Gesamt-Durchschnittswert einerseits und dem Grenz-Zustandssignalwert andererseits bestimmt wird, vorzugsweise, dass der jeweilige Instandhaltungszustand (25a, b, c, d) auch basierend auf einem Vergleich zwischen der Addition des jeweiligen Ist-Zustandssignal (9a, b) mit dem jeweiligen Differenzwert und dem Grenz-Zustandssignalwert bestimmt wird.

6. Verfahren nach einem der Ansprüche 1 bis 5, **dadurch gekennzeichnet, dass** das Fahrzeug (1) eine Vielzahl von elektronischen Steuervorrichtungen (6a, b) zur Ansteuerung einer jeweiligen Zugangsvorrichtung (2a, b) mit den Steuersignalen umfasst,

7. Verfahren nach einem der Ansprüche 1 bis 6, **dadurch gekennzeichnet, dass** eine Zentralrecheneinheit (10), vorzugsweise des Fahrzeugs (1), den Gesamt-Durchschnittwert ermittelt und die Ist-Zustandssignale (9a, b) mit dem Gesamt-Durchschnittswert vergleicht, insbesondere den Instandhaltungszustand (25a, b, c, d) der jeweiligen Zugangsvorrichtung (2a, b) bestimmt, vorzugsweise, dass die Zentralrecheneinheit (10) mit den Lokalrecheneinheiten (12a, b) über ein lokales, weiter insbesondere drahtloses, Netzwerk (11) des Fahrzeugs (1) zur Datenkommunikation verbunden ist.

8. Verfahren nach Anspruch 7, **dadurch gekennzeichnet, dass** die Steuersignale und die Ist-Zustandssignale (9a, b) der Vielzahl von Zugangsvorrichtungen (2a, b), vorzugsweise über das lokale Netzwerk (11), an die Zentralrecheneinheit (10) zur Bestimmung des Instandhaltungszustands (25a, b, c, d) der jeweiligen Zugangsvorrichtung (2a, b) übertragen werden.

9. Verfahren nach einem der Ansprüche 1 bis 8, **dadurch gekennzeichnet, dass** die Ist-Zustandssignale (9a, b) einen Energieverbrauch der jeweiligen Zugangsvorrichtung (2a, b) während eines Betätigungszyklus, vorzugsweise eines Öffnungszyklus und/oder eines Schließzyklus, des beweglichen Elements (3a, b) der jeweiligen Zugangsvorrichtung (2a, b) umfassen.

10. Verfahren nach einem der Ansprüche 1 bis 9, **dadurch gekennzeichnet, dass** der Gesamt-Durchschnittswert aus den Ist-Zustandssignalen (9a, b) derjenigen Zugangsvorrichtungen (2a, b) der Vielzahl von Zugangsvorrichtungen (2a, b) gebildet wird, welche im Wesentlichen gleichzeitig einen Betätigungszyklus ihres beweglichen Elements (3a, b) durchlaufen.

11. Verfahren nach einem der Ansprüche 1 bis 10, **dadurch gekennzeichnet, dass** für das Bilden des Gesamt-Durchschnittswerts diejenigen Ist-Zustandssignale (9a, b) der Vielzahl von Zugangsvorrichtungen (2a, b) außen vor bleiben, welche eine Minimalschwelle unterschreiten oder eine Maximalschwelle überschreiten.

12. Verfahren nach einem der Ansprüche 1 bis 11, **dadurch gekennzeichnet, dass** das Fahrzeug (1) eine Vielzahl von Messvorrichtungen (7a, b) zum Erzeugen von Messsignalen (8a, b) basierend auf einer Messung an einer jeweiligen Zugangsvorrichtung (2a, b) aufweist, vorzugsweise, dass die Ist-Zustandssignale (9a, b) die Messsignale (8a, b) zumindest teilweise umfassen und/oder dass die Ist-Zustandssignale (9a, b) zumindest teilweise basierend auf den Messsignalen (8a, b), insbesondere durch eine jeweilige Steuervorrichtung (6a, b), erzeugt werden.

13. Verfahren nach einem der Ansprüche 1 bis 12, **dadurch gekennzeichnet, dass** die Steuersignale jeweils eine Motorspannung zum Anlegen an den jeweiligen elektrischen Antrieb (4a, b) umfassen, vorzugsweise aus der jeweiligen Motorspannung bestehen, und/oder dass die Ist-Zustandssignale (9a, b) einen durch den jeweiligen elektrischen Antrieb (4a, b) fließenden Motorstrom umfassen.

14. Verfahren nach einem der Ansprüche 1 bis 13, **dadurch gekennzeichnet, dass** das Simulationsmodell aus Konstruktionsdaten zur Beschreibung der Zugangsvorrichtungen (2a, b) erzeugt wurde.

15. Verfahren nach Anspruch 14, **dadurch gekennzeichnet, dass** die Konstruktionsdaten eine Kombination einzelner Konstruktionselemente aufweisen, dass den Konstruktionselementen ein jeweiliges Elementsimulationsmodell zur Beschreibung des Konstruktionselements zugeordnet ist und dass das Erzeugen des Simulationsmodells die Kombination der jeweiligen Elementsimulationsmodelle der Konstruktionselemente umfasst.

Fig. 1

Fig. 2

**Europäisches Patentamt**
**European Patent Office**
**Office européen des brevets**

# EUROPÄISCHER RECHERCHENBERICHT

Nummer der Anmeldung

EP 21 17 5947

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | WO 2021/181322 A1 (FAIVELEY TRANSPORT ITALIA SPA [IT]) 16. September 2021 (2021-09-16) * Seite 1, Zeile 6 - Zeile 16 * * Seite 5, Zeile 1 - Seite 10, Zeile 29 * * Abbildungen 1,2,3b * | 1-15 | INV. G05B23/02 |
| Y | US 2019/253498 A1 (XU ZHIXING [CN] ET AL) 15. August 2019 (2019-08-15) * Absatz [0019] - Absatz [0025] * * Absatz [0049] * | 1-3,6-13 | |
| Y,D | US 6 636 814 B1 (MCCULLERS CURTIS W [US] ET AL) 21. Oktober 2003 (2003-10-21) * Spalte 2, Zeile 66 - Spalte 3, Zeile 12 * * Spalte 5, Zeile 28 - Zeile 38 * * Anspruch 1 * | 1-3,6-13 | |
| Y | EP 3 499 470 A1 (BODE GMBH & CO KG GEBR [DE]) 19. Juni 2019 (2019-06-19) * Absatz [0029] - Absatz [0033] * * Anspruch 1 * * Abbildung 1 * | 1,4,5, 14,15 | RECHERCHIERTE SACHGEBIETE (IPC) G05B |
| Y | DE 10 2017 215341 A1 (SIEMENS MOBILITY GMBH [DE]) 7. März 2019 (2019-03-07) * Absatz [0005] * * Absatz [0029] * * Absatz [0049] * * Seite 65 * | 1-15 | |

Der vorliegende Recherchenbericht wurde für alle Patentansprüche erstellt

| Recherchenort | Abschlußdatum der Recherche | Prüfer |
|---|---|---|
| München | 12. November 2021 | Marrone, Fabrizio |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 17 5947

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-11-2021

| Im Recherchenbericht angeführtes Patentdokument | Datum der Veröffentlichung | Mitglied(er) der Patentfamilie | Datum der Veröffentlichung |
|---|---|---|---|
| WO 2021181322 A1 | 16-09-2021 | KEINE | |
| US 2019253498 A1 | 15-08-2019 | CA 3036410 A1 | 22-03-2018 |
| | | CN 106230648 A | 14-12-2016 |
| | | EP 3515012 A1 | 24-07-2019 |
| | | JP 6794553 B2 | 02-12-2020 |
| | | JP 2020503773 A | 30-01-2020 |
| | | KR 20190060782 A | 03-06-2019 |
| | | RU 2712435 C1 | 28-01-2020 |
| | | US 2019253498 A1 | 15-08-2019 |
| | | WO 2018049695 A1 | 22-03-2018 |
| US 6636814 B1 | 21-10-2003 | AT 339336 T | 15-10-2006 |
| | | AU 769445 B2 | 29-01-2004 |
| | | CA 2390162 A1 | 17-05-2001 |
| | | DE 60030758 T2 | 16-05-2007 |
| | | EP 1233898 A1 | 28-08-2002 |
| | | ES 2272334 T3 | 01-05-2007 |
| | | HK 1046394 A1 | 10-01-2003 |
| | | KR 20020071859 A | 13-09-2002 |
| | | MX PA02004434 A | 30-09-2002 |
| | | TW 514612 B | 21-12-2002 |
| | | US 6636814 B1 | 21-10-2003 |
| | | WO 0134446 A1 | 17-05-2001 |
| EP 3499470 A1 | 19-06-2019 | DE 102017130002 A1 | 19-06-2019 |
| | | EP 3499470 A1 | 19-06-2019 |
| DE 102017215341 A1 | 07-03-2019 | AU 2018326136 A1 | 27-02-2020 |
| | | DE 102017215341 A1 | 07-03-2019 |
| | | EP 3649033 A1 | 13-05-2020 |
| | | RU 2742740 C1 | 10-02-2021 |
| | | US 2020241979 A1 | 30-07-2020 |
| | | WO 2019042671 A1 | 07-03-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6636814 B1